# EUROPEAN PATENT APPLICATION

(11) **EP 4 682 110 A1**
(43) Date of publication of application: **21.01.2026**
(21) Application number: 24854406.6
(22) Date of filing: 09.08.2024
(51) Int. Cl.: C01G 53/00, H01M 4/525, H01M 4/505, H01M 4/36, H01M 4/131, H01M 10/052, H01M 4/02

(54) **POSITIVE ELECTRODE ACTIVE MATERIAL, METHOD FOR PREPARING SAME, AND POSITIVE ELECTRODE AND LITHIUM SECONDARY BATTERY COMPRISING SAME**

(30) Priority: 11.08.2023 KR 20230105927
(71) Applicant: LG ENERGY SOLUTION, LTD., Seoul 07335 (KR)
(72) Inventor: HWANG, Jin Tae, Daejeon 34122 (KR); LHO, Eun Sol, Daejeon 34122 (KR); KIM, Hyeong Il, Daejeon 34122 (KR); OH, Su Yeon, Daejeon 34122 (KR); LEE, Seok Jin, Daejeon 34122 (KR)
(74) Representative: Hoffmann Eitle
(86) International application number: PCT/KR2024/011855
(87) International publication number: WO 2025/037855

(57) **Abstract**

The present invention relates to a positive electrode active material, which includes a single particle type lithium nickel-based oxide including nickel, cobalt and manganese, having an amount of nickel among total metals excluding lithium of 90 mol% or more, and including 1 to 30 nodules, wherein D₅₀ is in a range of 5 µm to 7um, and a maximum value of heat flow, which is measured with a differential scanning calorimeter (DSC) while a coin-half cell prepared by using the positive electrode active material is charged to 4.25 V and then heated from room temperature to 380°C at a heating rate of 10°C/min, is 15.0 W/g or less, and a preparation method thereof.

## Description

### TECHNICAL FIELD

This application claims priority from Korean Patent Application No. 10-2023-0105927, filed on August 11, 2023, the disclosure of which is incorporated by reference herein.

The present invention relates to a positive electrode active material, and a positive electrode and a lithium secondary battery which include the positive electrode active material, and more particularly, to a single particle type positive electrode active material having excellent thermal stability while containing 90 mol% or more of nickel (Ni), and a positive electrode and a lithium secondary battery which include the positive electrode active material.

### BACKGROUND ART

A lithium secondary battery is generally composed of a positive electrode, a negative electrode, a separator, and an electrolyte, and the positive electrode and the negative electrode respectively include active materials capable of intercalating and deintercalating lithium ions.

Lithium cobalt oxide (LiCoO₂), lithium nickel oxide (LiNiO₂), lithium manganese oxide (LiMnO₂ or LiMn₂O₄), or a lithium iron phosphate compound (LiFePO₄) has been used as a positive electrode active material of the lithium secondary battery. Among them, the lithium cobalt oxide has advantages of high operating voltage and excellent capacity characteristics, but is difficult to be commercially used in a large-capacity battery due to the high price and supply instability of cobalt as a raw material. Since the lithium nickel oxide has poor structural stability, it is difficult to achieve sufficient life characteristics. The lithium manganese oxide has excellent stability, but has a problem in that capacity characteristics are inferior. Accordingly, lithium composite transition metal oxides containing two or more types of transition metals have been developed to compensate for the problems of the lithium transition metal oxides containing nickel (Ni), cobalt (Co), or manganese (Mn) alone, and, among them, a lithium nickel cobalt manganese oxide containing Ni, Co, and Mn has been widely used in the field of electric vehicle batteries.

A conventional lithium nickel cobalt manganese oxide was generally in a form of a spherical secondary particle in which tens to hundreds of primary particles were aggregated. However, with respect to the lithium nickel cobalt manganese oxide in the form of a secondary particle in which many primary particles are aggregated as described above, there is a problem in that particle breakage, in which the primary particles fall off in a rolling process during preparation of the positive electrode, is likely to occur and cracks occur in the particles during charge and discharge. In a case in which the particle breakage or cracking of the positive electrode active material occurs, since a contact area with an electrolyte solution is increased, there is a problem in that active material degradation and gas generation due to a side reaction with the electrolyte solution are increased.

Recently, in the field of electric vehicles, lithium secondary batteries having high energy density are required to extend a single-charge driving range, and, accordingly, a nickel content of the positive electrode active material has tended to gradually increase.

However, with respect to a high-nickel (high-Ni) positive electrode active material in which the nickel content is high, high capacity may be achieved, but, since a large amount of highly reactive Ni⁺⁴ ions are generated if charge and discharge are repeated, structural collapse of the positive electrode active material occurs, and, as a result, there is a problem in that degradation rate of the positive electrode active material is increased to degrade life characteristics and battery safety is reduced due to low thermal stability.

Thus, there is a need to develop a positive electrode active material which may simultaneously achieve high capacity and high thermal stability.

### DISCLOSURE OF THE INVENTION

### TECHNICAL PROBLEM

An aspect of the present invention provides a positive electrode active material having excellent thermal stability as well as a high amount of nickel (Ni) among total metals excluding lithium of 90 mol% or more and a method of preparing the same.

Another aspect of the present invention provides a positive electrode including the above positive electrode active material and a lithium secondary battery in which thermal stability is excellent by including the positive electrode, and high-temperature and high-voltage continuous charging characteristics are excellent.

### TECHNICAL SOLUTION

According to an embodiment, the present invention provides a method of preparing a positive electrode active material which includes: preparing a single particle type lithium nickel-based oxide by mixing a lithium raw material and a precursor, in which an amount of nickel (Ni) among total metal elements is 90 mol% or more, D₅₀ is in a range of 5 µm to 8 µm, and a ratio (BET/D₅₀) of a Brunauer-Emmett-Teller (BET) specific surface area to the D₅₀ is in a range of 0.5 to 2, preferably 0.8 to 1.5, and sintering the mixture.

In this case, the precursor may preferably have a D₅₀ of 5 µm to 7 µm, more preferably, 5 µm to 6.5 µm.

The precursor may have a BET specific surface area of 5 m²/g to 10 m²/g, preferably 5 m²/g to 8 m²/g, and more preferably 5 m²/g to 7 m²/g.

Specifically, the precursor may be a nickel cobalt manganese hydroxide having an amount of Ni among total metal elements of 90 mol% or more, and more specifically, may be represented by [Formula 1].

[Formula 1] NiₐCo_{b}Mn_{c}M¹_{d}(OH)₂

In Formula 1, M¹ is at least one selected from the group consisting of titanium (Ti), magnesium (Mg), aluminum (Al), zirconium (Zr), yttrium (Y), barium (Ba), calcium (Ca), strontium (Sr), tungsten (W), tantalum (Ta), niobium (Nb), and molybdenum (Mo), and 0.90≤a<1, 0<b<0.1, 0<c<0.1, and 0≤d≤0.05.

The sintering may be performed at 800°C to 900°C, preferably 820°C to 880°C, and more preferably about 820°C to 870°C.

The lithium nickel-based oxide may include a lithium by-product in an amount of 1 mol% to 5 mol%, preferably, 1 mol% to 3 mol%.

The method of preparing a positive electrode active material according to the present invention may further include mixing the single particle type lithium nickel-based oxide with a coating raw material and performing a heat treatment, after the preparing of the single particle type lithium nickel-based oxide.

In this case, the coating raw material may include at least one element selected from the group consisting of cobalt (Co), Al, W, boron (B), Ti, Mg, Zr, Y, Ba, Ca, Sr, Ta, Nb, and Mo.

The heat treatment may be performed at an appropriate temperature depending on a type of the element included in the coating layer. For example, the heat treatment may be performed at 300°C to 800°C, preferably 400°C to 800°C, and more preferably 500°C to 800°C.

According to another embodiment, the present invention provides a positive electrode active material including a single particle type lithium nickel-based oxide which includes nickel, cobalt and manganese, has an amount of nickel among total metals excluding lithium of 90 mol% or more, and includes 1 to 30 nodules.

In this case, the positive electrode active material may have a D₅₀ of 5 µm to 8 µm, preferably 5 µm to 7 µm, and more preferably 5 µm to 6.5 µm.

Also, a maximum value of heat flow, which is measured with a differential scanning calorimeter (DSC) while a coin-half cell prepared by using the positive electrode active material is charged to 4.25 V and heated from room temperature to 380°C at a heating rate of 10°C/min, may be 15.0 W/g or less, preferably 5 W/g to 15.0 W/g, and more preferably 7 W/g to 15.0 W/g.

Furthermore, charge capacity may be 240 mAh/g or more, preferably 240 mAh/g to 245 mAh/g, and more preferably 240 mAh/g to 243 mAh/g when the coin-half cell prepared by using the positive electrode active material is charged to 4.25 V.

Also, a cation mixing ratio of the positive electrode active material may be in a range of 0.9 at% to 1.5 at%, preferably, 1 at% to 1.5 at%.

The single particle type lithium nickel-based oxide may be a lithium nickel-based oxide having an amount of Ni among total metal elements excluding lithium of 90 mol% or more, and more specifically, may be represented by [Formula 2].

[Formula 2] Liₓ[NiₐCo_{b}Mn_{c}M¹₆]O₂

In Formula 2, M¹ is at least one selected from the group consisting of Ti, Mg, Al, Zr, Y, Ba, Ca, Sr, W, Ta, Nb, and Mo, and 0.8≤x≤1.2, 0.90≤a<1, 0<b<0.1, 0<c<0.1, and 0≤d≤0.05.

The positive electrode active material may further include a coating layer which is formed on the single particle type lithium nickel-based oxide, and the coating layer may include at least one element selected from the group consisting of Co, Al, W, B, Ti, Mg, Zr, Y, Ba, Ca, Sr, Ta, Nb, and Mo.

Preferably, the coating layer may include Co, and in this case, an amount of the Co included in the coating layer may be in a range of 0.5 mol% to 4 mol%, preferably 0.5 mol% to 3 mol%, and more preferably 1 mol% to 2 mol% based on the total number of moles of transition metals included in the entire positive electrode active material.

According to another embodiment, the present invention provides a positive electrode including the positive electrode active material according to the present invention, and a lithium secondary battery including the positive electrode.

### ADVANTAGEOUS EFFECTS

In a case in which a single particle type lithium nickel-based oxide is prepared by using a precursor in which a ratio of a specific surface area to D₅₀ satisfies a specific range as in the present invention, a positive electrode active material having excellent thermal stability may be prepared even though a nickel content is high at 90 mol% or more.

The positive electrodeactive material according to the present invention achieves high capacity by including nickel in an amount of 90 mol% or more and simultaneously has thermal stability equivalent to that of a positive electrode active material having a nickel content of less than 90 mol%.

Thus, in a case in which the positive electrode active material according to the present invention is used in a lithium secondary battery, high capacity and high thermal stability may be achieved at the same time. Also, the lithium secondary battery using the positive electrode active material according to the present invention may achieve excellent continuous charging performance under high-temperature and high-voltage conditions.

### BRIEF DESCRIPTION OF THE DRAWINGS

FIG. 1 is a graph illustrating heat flows according to temperature of coin-half cells using positive electrode active materials of Examples 1 and 2 and Comparative Examples 1 to 4.
FIG. 2 is a graph illustrating continuous charging performances of the coin-half cells using the positive electrode active materials of Examples 1 and 2 and Comparative Examples 3 and 4.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "single particle type" denotes a particle composed of 30 or less nodules, wherein it is a concept that includes a single particle composed of one nodule and a pseudo-single particle as a composite of 2 to 30 nodules.

The "nodule" is a sub-particle unit constituting the single particle and the pseudo-single particle, wherein the nodule may be a single crystal without a crystalline grain boundary, or may be a polycrystal in which grain boundaries do not exist in appearance when observed by using a scanning electron microscope with a field of view of 5,000 times to 20,000 times.

In the present invention, the expression "secondary particle" means a particle formed by aggregation of a plurality, for example, tens to hundreds of primary particles. Specifically, the secondary particle may be an aggregate of 50 or more primary particles.

In the present invention, the expression "particle" is a concept including any one or all of the single particle, the pseudo-single particle, the primary particle, the nodule, and the secondary particle.

An average particle diameter (Dₘₑₐₙ) of the nodules or primary particles in the present invention means an arithmetic mean value calculated after measuring particle diameters of the nodules or primary particles observed in a scanning electron microscope image.

The expression "average particle diameter D₅₀" in the present invention means a particle size corresponding to a volume accumulation of 50% in a volume cumulative particle size distribution of measurement target powder, wherein it may be measured by using a laser diffraction method. For example, after dispersing the measurement target powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter D₅₀ may then be measured by obtaining a particle size corresponding to a volume accumulation of 50%.

In the present invention, a "BET specific surface area" is measured by a Brunauer-Emmett-Teller (BET) method, wherein, specifically, the specific surface area may be calculated from a nitrogen gas adsorption amount at a liquid nitrogen temperature (77K) using BELSORP-mino II by Bell Japan Inc.

As a result of a significant amount of research conducted into developing a positive electrode active material having excellent thermal stability as well as high capacity characteristics, the present inventors have found that, in a case in which a positive electrode active material is prepared by using a precursor in which an amount of nickel (Ni) is 90 mol% or more and a ratio (D₅₀/BET) of D₅₀ to a BET specific surface area satisfies a specific range, excellent capacity characteristics and excellent thermal stability may be achieved at the same time, thereby leading to the completion of the present invention.

### Method of Preparing Positive Electrode Active Material

A method of preparing a positive electrode active material according to the present invention includes preparing a single particle type lithium nickel-based oxide by mixing a lithium raw material and a precursor, in which an amount of nickel (Ni) among total metal elements is 90 mol% or more and a ratio (BET/D₅₀) of a BET specific surface area to D₅₀ is in a range of 0.5 to 2, preferably, 0.8 to 1.5, and sintering the mixture.

According to the research of the present inventors, with respect to an ultra-high-nickel positive electrode active material having a Ni content of 90 mol% or more, unlike a positive electrode active material having a Ni content of less than 90 mol%, a ratio (BET/D₅₀) of a BET specific surface area to D₅₀ of a precursor used during preparation was found to be closely related to thermal stability. Specifically, in a case in which a precursor, in which the ratio (BET/D₅₀) of the BET specific surface area to the D₅₀ satisfies a range of 0.5 to 2, was used when preparing the ultra-high-nickel positive electrode active material having a Ni content of 90 mol% or more, since the thermal stability was improved in comparison to a case where a precursor having the ratio (BET/D₅₀) outside the above range was used, it was found that an amount of heat generated when exposed to high temperatures was significantly reduced. An average particle diameter D₅₀ of the precursor affects an average particle diameter D₅₀ of the positive electrode active material, wherein the smaller the D₅₀ of the positive electrode active material is, the more quickly the positive electrode active material is degraded when exposed to high temperatures, and thus, the thermal stability is reduced. Also, the lower the BET specific surface area of the precursor, the higher the reactivity with lithium during sintering, and accordingly, a cation mixing ratio of the synthesized single particle type positive electrode active material is decreased, and a degree of completeness of crystal structure of the positive electrode active material is increased. If the degree of the completeness of the crystal structure of the positive electrode active material is excessively increased, a side reaction with an electrolyte solution on a surface of the positive electrode active material is increased to reduce the thermal stability. Thus, in the present invention, the degree of the completeness of the crystal structure and the average particle diameter D₅₀ of the positive electrode active material, which was synthesized by using the precursor in which the ratio (BET/D₅₀) of the BET specific surface area to the average particle diameter D₅₀ satisfied the range of 0.5 to 2, were allowed to be adjusted to an appropriate range. In a case in which the precursor having the BET/D₅₀ of 0.5 or more is used as in the present invention, since the degree of the completeness of the crystal structure of the positive electrode active material is decreased, electrical and chemical inactivity of the surface of the positive electrode active material is increased, and accordingly, a thermal stability improvement effect may be obtained while the side reaction with the electrolyte solution is reduced. In a case in which the BET/D₅₀ is greater than 2, since the D₅₀ of the positive electrode active material is excessively decreased or the BET specific surface area of the positive electrode active material is excessively increased, the side reaction with the electrolyte solution is increased to reduce the thermal stability improvement effect and electrochemical properties of the positive electrode active material are deteriorated due to an increase in resistance.

The precursor may be a nickel cobalt manganese hydroxide having an amount of Ni among total metal elements of 90 mol% or more, and more specifically, may be represented by [Formula 1] below.

[Formula 1] NiₐCo_{b}Mn_{c}M¹_{d}(OH)₂

In Formula 1, M¹ may be at least one selected from the group consisting of titanium (Ti), magnesium (Mg), aluminum (Al), zirconium (Zr), yttrium (Y), barium (Ba), calcium (Ca), strontium (Sr), tungsten (W), tantalum (Ta), niobium (Nb), and molybdenum (Mo), and may preferably be at least one selected from the group consisting of Al, Zr, Y, Ti, Sr, and Nb.

a represents a mole fraction of nickel among the metal elements in the precursor, wherein a may satisfy 0.90≤a<1, 0.90≤a≤0.99, or 0.90≤a≤0.99.

b represents a mole fraction of cobalt(Co) among the metal elements in the precursor, wherein b may satisfy 0<b<0.1, 0.01≤b<0.1, or 0.02≤b<0.1.

c represents a mole fraction of manganese (Mn) among the metal elements in the precursor, wherein c may satisfy 0.005≤c<0.1 or 0.01≤c≤0.08.

d represents a mole fraction of element M¹ among the metal elements in the precursor, wherein d may satisfy 0≤d≤0.05, 0≤d≤0.02, or 0≤d≤0.01.

The precursor may have a D₅₀ of 5 µm to 8 µm, preferably 5 µm to 7 µm, and more preferably 5 µm to 6.5 µm. In a case in which the D₅₀ of the precursor satisfies the above range, a better thermal stability improvement effect may be obtained while minimizing the increase in resistance of the positive electrode active material prepared by using the precursor. In a case in which a precursor having an excessively small D₅₀ is used, the thermal stability improvement effect of the positive electrode active material is insignificant, and, in a case in which a precursor having an excessively large D₅₀ is used, initial resistance may be increased to adversely affect the electrochemical properties of the positive electrode active material.

Also, the precursor may have a Brunauer-Emmett-Teller (BET) specific surface area of 5 m²/g to 10 m²/g, preferably 5 m²/g to 8 m²/g, and more preferably 5 m²/g to 7 m²/g. In a case in which a positive electrode active material is prepared by using a precursor in which the BET specific surface area of the precursor satisfies the above range, since the degree of the completeness of the crystal structure of the surface of the positive electrode active material is formed to an appropriate level, the side reaction with the electrolyte solution is reduced to improve the thermal stability. In a case in whicha precursor having an excessively small BET specific surface area is used, since a layered crystal structure is excessively developed on the surface of the positive electrode active material, the side reaction with the electrolyte solution is increased to reduce stability during high-temperature exposure, and, in a case in which a precursor having an excessively large BET specific surface area is used, since an excessively large amount of an inactive crystal structure is formed on the surface of the positive electrode active material, the resistance is increased and the electrochemical properties are deteriorated.

Next, as the lithium raw material, lithium-containing sulfates, nitrates, acetic acid salts, carbonates, oxalates, citrates, halides, hydroxides, or oxyhydroxides may be used, and, for example, Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a mixture thereof may be used.

The lithium raw material and the precursor may be mixed such that a molar ratio of lithium (Li) :total metals in the precursor is in a range of 1:1 to 1.2:1, preferably 1:1 to 1.1:1, and more preferably 1:1 to 1.05:1. When the mixing ratio of the lithium raw material to the metal in the precursor satisfies the above range, a positive electrode active material having excellent capacity characteristics and thermal stability may be prepared. In this case, a M¹ metal-containing raw material may be mixed with the lithium raw material and the precursor and sintered, if necessary.

The sintering may be performed at 800°C to 900°C, preferably 820°C to 880°C, and more preferably 820°C to 870°C. In a case in which the sintering temperature satisfies the above range, a single particle type lithium nickel-based oxide having excellent electrochemical properties may be prepared. If the sintering temperature is excessively low, a lithium nickel-based oxide in the form of a secondary particle, rather than the single particle type lithium nickel-based oxide, is prepared, and, if the sintering temperature is excessively high, a thick inactive phase, such as a rock-salt phase, is formed on a surface of the particle to reduce resistance, output, and capacity characteristics.

The sintering may be performed for 5 hours to 35 hours, preferably 10 hours to 30 hours, and more preferably 10 hours to 20 hours in an oxygen atmosphere. In the present specification, the oxygen atmosphere means an atmosphere containing enough oxygen for sintering in addition to an air atmosphere. Particularly, it is desirable to perform the sintering in an atmosphere in which an oxygen partial pressure is higher than that of the air atmosphere.

The lithium nickel-based oxide prepared by the above-described method may include a lithium by-product, such as lithium hydroxide and lithium carbonate, on the surface of the lithium nickel-based oxide particle, and it is desirable that an amount of the lithium by-product is in a range of about 1 mol% to 5 mol%, preferably about 1 mol% to 4 mol%, and more preferably about 1.5 mol% to 3 mol%. In a case in which the lithium nickel-based oxide includes the lithium by-product in an amount within the above range, a coating layer may be uniformly formed in a coating process to be described later. If the amount of the lithium by-product is excessively small, a coating layer may be formed non-uniformly, and, if the amount of the lithium by-product is excessively large, an electrolyte may react with the lithium by-product to increase gas generation and degrade life characteristics.

The method of preparing a positive electrode active material according to the present invention, if necessary, may further include mixing the single particle type lithium nickel-based oxide with a coating raw material and performing a heat treatment, after the preparing of the single particle type lithium nickel-based oxide.

In this case, the coating raw material may include at least one element selected from the group consisting of Co, Al, W, boron (B), Ti, Mg, Zr, Y, Ba, Ca, Sr, Ta, Nb, and Mo, and may more specifically be oxides, hydroxides, carbides, chlorides, carbonates, or sulfates containing the above elements. Preferably, the coating raw material may include Co. Since the single particle type lithium nickel-based oxide is sintered at a relatively high temperature, a large amount of the electrically inactive phase, such as a rock-salt structure, is formed on the surface of the particle, and thus, resistance is high and particularly, in a case in which a precursor with a relatively large particle diameter is used, there is a problem in that the increase in resistance is further intensified. However, in a case in which a Co-containing coating layer is formed on the surface of the single particle type lithium nickel-based oxide, since a portion of the inactive phase on the surface changes into a layered structure while being recrystallize during a heat treatment process, an effect of reducing the resistance may be achieved.

The mixing may be performed by solid-phase mixing or liquid-phase mixing, and the heat treatment may be performed at an appropriate temperature depending on the coating raw material. For example, the heat treatment of the coating process may be performed at a temperature of 300°C to 800°C, preferably 400°C to 800°C, and more preferably 500°C to 800°C, but the present invention is not limited thereto.

### Positive Electrode Active Material

Next, a positive electrode active material according to the present invention will be described.

The positive electrode active material according to the present invention may be one prepared by the above-described method of preparing a positive electrode active material.

The positive electrode active material according to the present invention includes a single particle type lithium nickel-based oxide which includes nickel, cobalt and manganese, has an amount of nickel among total metals excluding lithium of 90 mol% or more, and includes 1 to 30 nodules.

In a case in which the single particle type lithium nickel-based oxide having a high nickel content as described above is included, high capacity may be achieved, gas generation may be suppressed by suppressing the side reaction with the electrolyte solution, and excellent life characteristics may be achieved.

With respect to a lithium nickel-based oxide in the form of a secondary particle in which 31 to several hundred primary particles are aggregated, a side reaction with an electrolyte solution occur frequently due to a large contact area with the electrolyte solution, and gas is generated during the side reaction process. Particularly, an amount of the gas generated is further increased under high-temperature and/or high-voltage conditions, and, as a result, cell degradation rapidly proceeds. In contrast, since the single particle type lithium nickel-based oxide has the smaller number of nodules constituting the particle and, as a result, a contact area with the electrolyte solution is small due to less interfaces in the particle, there are less side reactions with the electrolyte solution than the secondary particle, and accordingly, the amount of the gas generated is also significantly small. Thus, in a case in which the single particle type lithium nickel-based oxide is used as a positive electrode active material, excellent life characteristics may be obtained even under high-temperature and/or high-voltage conditions.

Specifically, the single particle type lithium nickel-based oxide may be a lithium nickel-based oxide having an amount of Ni among total metal elements excluding lithium of 90 mol% or more, and more specifically, may be represented by [Formula 2] below.

[Formula 2] Liₓ[NiₐCo_{b}Mn_{c}M¹₆]O₂

In Formula 2, M¹ may be at least one selected from the group consisting of Ti, Mg, Al, Zr, Y, Ba, Ca, Sr, W, Ta, Nb, and Mo, and may preferably be at least one selected from the group consisting of Al, Zr, Y, Ti, Sr, and Nb.

x represents a mole fraction of lithium in the lithium nickel-based oxide, wherein x may satisfy 0.8≤x≤1.2, 0.9≤x≤1.1, or 1.0≤x≤1.1.

a represents a mole fraction of nickel among the metal elements excluding lithium in the lithium nickel-based oxide, wherein a may satisfy 0.90≤a<1, 0.90≤a≤0.99, or 0.90≤a≤0.99.

b represents a mole fraction of Co among the metal elements excluding lithium in the lithium nickel-based oxide, wherein b may satisfy 0<b<0.1, 0.01≤b<0.1, or 0.02≤b<0.1.

c represents a mole fraction of Mn among the metal elements excluding lithium in the lithium nickel-based oxide, wherein c may satisfy 0.005≤c<0.1 or 0.01≤c≤0.08.

d represents a mole fraction of element M¹ among the metal elements excluding lithium in the lithium nickel-based oxide, wherein d may satisfy 0≤d≤0.05, 0≤d≤0.02, or 0≤d≤0.01.

It is desirable that the single particle type lithium nickel-based oxide includes 30 or less nodules, preferably 1 to 25 nodules, and more preferably 1 to 15 nodules. The reason for this is that, in a case in which the number of nodules constituting the lithium nickel-based oxide is greater than 30, particle breakage increases during the preparation of the electrode, and internal crack generation due to volume expansion/contraction of the nodules during charge and discharge may be increased to reduce an effect of improving high-temperature life characteristics and high-temperature storage characteristics.

The nodule may have an average particle diameter of 0.8 µm to 4.0 µm, preferably 0.8 µm to 3 µm, and more preferably 1.0 µm to 2.0 µm. When the average particle diameter of the nodules satisfies the above range, the particle breakage is minimized during the preparation of the electrode, and the increase in resistance may be suppressed more effectively. In this case, the average particle diameter of the nodules denotes a value which is obtained by measuring particle diameters of the nodules observed in a scanning electron microscope (SEM) image that is obtained by analyzing positive electrode active material powder with a scanning electron microscope, and then calculating an arithmetic mean value of the measured values.

The positive electrode active material according to the present invention may further include a coating layer which is formed on the single particle type lithium nickel-based oxide, and the coating layer may include at least one element selected from the group consisting of Co, Al, W, B, Ti, Mg, Zr, Y, Ba, Ca, Sr, Ta, Nb, and Mo.

Preferably, the coating layer may include Co, and in this case, an amount of the Co included in the coating layer may be in a range of 0.5 mol% to 4 mol%, preferably 0.5 mol% to 3 mol%, and more preferably 1 mol% to 2 mol% based on the total number of moles of transition metals included in the entire positive electrode active material. In a case in which the amount of the Co in the coating layer satisfies the above range, the resistance reduction effect of the positive electrode active material is excellent, and excellent capacity may also be achieved.

The positive electrode active material according to the present invention may have a D₅₀ of 5 µm to 8 µm, preferably 5 µm to 7 µm, and more preferably 5 µm to 6.5 µm. With respect to the ultra-high-nickel positive electrode active material having a Ni content of 90 mol% or more, if the D₅₀ is small at less than 5 µm, the thermal stability improvement effect is insignificant, and, if the D₃₀ is greater than 8 µm, the resistance is excessively increased to reduce capacity and output characteristics.

A cation mixing ratio of the positive electrode active material may be in a range of 0.9 at% to 1.5 at%, preferably, 1 at% to 1.5 at%. When the cation mixing ratio of the positive electrode active material satisfies the above range, the side reaction with the electrolyte solution on the surface of the particle is reduced, and, as a result, an effect of reducing leakage current during high-temperature, high-voltage continuous charging may be obtained.

The positive electrode active material of the present invention as described above has excellent capacity characteristics and thermal stability.

Specifically, a maximum value of heat flow, which is measured with a differential scanning calorimeter (DSC) while a coin-half cell prepared by using the positive electrode active material of the present invention is charged to 4.25 V and then heated from room temperature to 380°C at a heating rate of 10°C/min, may be 15.0 W/g or less, preferably 5 W/g to 15.0 W/g, and more preferably 7 W/g to 15.0 W/g.

Also, charge capacity may be 240 mAh/g or more, preferably 240 mAh/g to 245 mAh/g, and more preferably 240 mAh/g to 243 mAh/g when the coin-half cell prepared by using the positive electrode active material is charged to 4.25 V.

### Positive Electrode

Next, a positive electrode of the present invention will be described.

The positive electrode according to the present invention includes the above-described positive electrode active material according to the present invention, and, if necessary, may further include a positive electrode conductive agent and a positive electrode binder. Specifically, the positive electrode includes a positive electrode collector and a positive electrode active material layer formed on at least one surface of the positive electrode collector, and the positive electrode active material layer includes a positive electrode active material, a positive electrode conductive agent, and a positive electrode binder. Since the positive electrode active material is the same as described above, a detailed description thereof will be omitted.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material may be included in an amount of 93 wt% to 99 wt%, preferably 95 wt% to 98 wt%, and more preferably 95 wt% to 97 wt% based on a total weight of the positive electrode active material layer, that is, a total amount of the positive electrode active material, the positive electrode conductive agent, and the positive electrode binder. When the amount of the positive electrode active material satisfies the above range, high energy density may be achieved.

Next, the positive electrode conductive agent is used to provide conductivity to the positive electrode, wherein any conductive agent may be used without particular limitation as long as it has suitable electron conductivity without causing adverse chemical changes in the battery. Specific examples of the conductive agent may be graphite such as natural graphite or artificial graphite; carbon-based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The positive electrode conductive agent may be included in an amount of 0.1 wt% to 10 wt%, preferably 0.5 wt% to 8 wt%, and more preferably 1 wt% to 5 wt% based on the total weight of the positive electrode active material layer.

Next, the positive electrode binder improvesthe adhesion between the positive electrode active material particles and the adhesion between the positive electrode active material and the positive electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used.

The positive electrode binder may be included in an amount of 0.5 wt% to 5 wt%, preferably 1 wt% to 4 wt%, and more preferably 1 wt% to 3 wt% based on the total weight of the positive electrode active material layer.

The positive electrode may be prepared according to a typical method of preparing a positive electrode. For example, after a positive electrode slurry is prepared by mixing the positive electrode active material, the positive electrode binder, and/or the positive electrode conductive agent in a solvent and is applied onto the positive electrode collector, the positive electrode may be prepared by drying and rolling the coated positive electrode collector, or may be prepared by casting the positive electrode slurry on a separate support and then laminating a film separated from the support on the positive electrode collector.

Solvents normally used in the artmay be used as the solvent of the positive electrode slurry, and, for example, any one of dimethyl sulfoxide (DMSO), isopropyl alcohol, N-methylpyrrolidone (NMP), acetone, or water, or a mixture of two or more thereof may be used. An amount of the solvent used may be sufficient if the solvent may dissolve or disperse the positive electrode active material, the conductive agent, and the binder in consideration of a coating thickness of the slurry and manufacturing yield, and may allow to have viscosity that may provide excellent thickness uniformity during the subsequent coating for the preparation of the positive electrode.

### Lithium Secondary Battery

Next, a lithium secondary battery according to the present invention will be described.

The lithium secondary battery of the present invention includes the positive electrode according to the present invention. Specifically, the lithium secondary battery includes a positive electrode, a negative electrode disposed to face the positive electrode, a separator disposed between the positive electrode and the negative electrode, and an electrolyte, and, in this case, the positive electrode is the same as described above.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500um, and, similar to the positive electrode collector, microscopic irregularities may be formed on the surface of the collector to improve the adhesion of anegative electrode active material. The negative electrode collector, for example, may be used in various shapes such as that of a film, a sheet, a foil, a net, a porous body, a foam body, a non-woven fabric body, and the like.

The negative electrode active material layer optionally includes a negative electrode binder and a negative electrode conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<p<2), SnO₂, vanadium oxide, and lithium vanadium oxide; or a composite including the metallic compound and the carbonaceous material such as a Si-C composite or a Sn-C composite, and any one thereof or a mixture of two or more thereof may be used.

Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon-based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The negative electrode conductive agent may be typically included in an amount of 1 wt% to 30 wt%, preferably 1 wt% to 20 wt%, and more preferably 1 wt% to 10 wt% based on a total weight of the negative electrode active material layer.

The negative electrode binder improves the adhesion between the negative electrode active material particles and the adhesion between the negative electrode active material and the negative electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomerrubber (EPDM rubber), a sulfonated EPDM, a styrene-butadiene rubber (SBR), a fluorine rubber, or various copolymers thereof, and any one thereof or a mixture of two or more thereof may be used. The negative electrode binder may be included in an amount of 1 wt% to 30 wt%, preferably 1 wt% to 20 wt%, and more preferably 1 wt% to 10 wt% based on the total weight of the negative electrode active material layer.

The negative electrode active material layer, for example, may be prepared by applying a negative electrode slurry including the negative electrode active material and optionally the negative electrode binder and the negative electrode conductive agent onto the negative electrode collector and drying the coated negative electrode collector, or may be prepared by casting the negative electrode slurry on a separate support and then laminating a film separated from the support on the negative electrode collector.

In the lithium secondary battery, the separator separates the negative electrode and the positive electrode and provides a movement path of lithium ions, wherein any separator may be used as the separator without particular limitationas long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon groupand may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, an additive may be further included in the electrolyte. For example, as the additive, a halo-alkylene carbonate-based compound such as difluoroethylene carbonate, pyridine, triethylphosphite, triethanolamine, cyclic ether, ethylenediamine, n-glyme, hexamethylphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be used alone or in a mixture thereof, but the present invention is not limited thereto. The additive may be included in an amount of 0.1 wt% to 10wt%, preferably, 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

A nickel cobalt manganese hydroxide precursor having a D₅₀ of 5.6 µm, a BET of 5.6 m²/g, and a molar ratio of Ni:Co:Mn of 92:6:2 was mixed with lithium hydroxide such that a molar ratio of Li/(Ni+Co+Mn) was 1.02, and sintering was then performed at 860°C for 12 hours to prepare a lithium nickel-based oxide in a form of a single particle. Then, the lithium nickel-based oxide and cobalt hydroxide were mixed and then heat-treated at 750°C to prepare a positive electrode active material having a Co-containing coating layer formed thereon. D₅₀ of the prepared positive electrode active material was 5.5 µm, and a molar ratio of Ni:Co:Mn in the entire positive electrode active material was 91:7:2.

### Example 2

A positive electrode active material was prepared in the same manner as in Example 1 except that a nickel cobalt manganese hydroxide precursor having a D₅₀ of 5.5 µm, a BET of 6.16 m²/g, and a molar ratio of Ni:Co:Mn of 92:6:2 was used. D₅₀ of the prepared positive electrode active material was 5.4 µm, and a molar ratio of Ni:Co:Mn in the entire positive electrode active material was 91:7:2.

### Comparative Example 1

A nickel cobalt manganese hydroxide precursor having a D₅₀ of 3.5 µm, a BET of 8.75 m²/g, and a molar ratio of Ni:Co:Mn of 86:6:8 was mixed with lithium hydroxide such that a molar ratio of Li/(Ni+Co+Mn) was 1.02, and sintering was then performed at 880°C for 12 hours to prepare a lithium nickel-based oxide in a form of a single particle. Then, the lithium nickel-based oxide and cobalt hydroxide were mixed and then heat-treated at 750°C to prepare a positive electrode active material having a Co-containing coating layer formed thereon. D₅₀ of the prepared positive electrode active material was 3.5 µm, and a molar ratio of Ni:Co:Mn in the entire positive electrode active material was 85:7:8.

### Comparative Example 2

A positive electrode active material was prepared in the same manner as in Example 1 except that a nickel cobalt manganese hydroxide precursor having a D₅₀ of 3.8µm, a BET of 8.74 m²/g, and a molar ratio of Ni:Co:Mn of 92:6:2 was used. D₅₀ of the prepared positive electrode active material was 3.8 µm, and a molar ratio of Ni:Co:Mn in the entire positive electrode active material was 91:7:2.

### Comparative Example 3

A positive electrode active material was prepared in the same manner as in Example 1 except that a nickel cobalt manganese hydroxide precursor having a D₅₀ of 5.4 µm, a BET of 1.944 m²/g, and a molar ratio of Ni:Co:Mn of 92:6:2 was used. D₅₀ of the prepared positive electrode active material was 5.4 µm, and a molar ratio of Ni:Co:Mn in the entire positive electrode active material was 91:7:2.

### Comparative Example 4

A positive electrode active materialwas prepared in the same manner as in Example 1 except that a nickel cobalt manganese hydroxide precursor having a D₅₀ of 5.5 µm, a BET of 2.585 m²/g, and a molar ratio of Ni:Co:Mn of 92:6:2 was used. D₅₀ of the prepared positive electrode active material was 5.5 µm, and a molar ratio of Ni:Co:Mn in the entire positive electrode active material was 91:7:2.

**[Table 1]**

| | Precursor | | | | Active material | |
|---|---|---|---|---|---|---|
| | D₅₀ (um) | BET (m²/g) | BET/D₅₀ | Ni:Co:Mn (molar ratio) | D₅₀ (µm) | Ni:Co:Mn (molar ratio) |
| Example 1 | 5.6 | 5.6 | 1.00 | 92:6:2 | 5.5 | 91:7:2 |
| Example 2 | 5.5 | 6.16 | 1.13 | 92:6:2 | 5.4 | 91:7:2 |
| Comparative Example 1 | 3.5 | 8.75 | 2.50 | 86:6:8 | 3.5 | 85:7:8 |
| Comparative Example 2 | 3.8 | 8.74 | 2.29 | 92:6:2 | 3.8 | 91:7:2 |
| Comparative Example 3 | 5.4 | 1.944 | 0.36 | 92:6:2 | 5.4 | 91:7:2 |
| Comparative Example 4 | 5.5 | 2.585 | 0.47 | 92:6:2 | 5.5 | 91:7:2 |

### Experimental Example 1

After the lithium nickel-based oxides prepared by the methods of Examples 1 and 2 and Comparative Examples 1 to 4 were collected to measure masses of LiOH and LiCO₃ by pH titration, a lithium by-product content (mol%) in the lithium nickel-based oxide before the formation of the Co coating layer was measured by a method of converting the masses into mol%.

Also, cation mixing ratios of the positive electrode active materials prepared in Examples 1 and 2 and Comparative Examples 1 to 4 were measured through X-ray diffraction (XRD) analysis. The XRD analysis was performed using an X-ray diffractometer (Bruker AXS D4-Endeavor XRD), wherein a Cu Ka radiation source was used, and the XRD analysis was performed at an accelerating voltage of 10 kV.

Measurement results are presented in [Table 2] below.

**[Table 2]**

| | Lithium by-product (mol%) | Cation mixing ratio (at%) |
|---|---|---|
| Example 1 | 2.4 | 1.0 |
| Example 2 | 2.7 | 1.2 |
| Comparative Example 1 | 1.8 | 0.6 |
| Comparative Example 2 | 2.0 | 0.7 |
| Comparative Example 3 | 1.4 | 0.5 |
| Comparative Example 4 | 2.0 | 0.8 |

As illustrated in [Table 2], with respect to the lithium nickel-based oxides of Examples 1 and 2 prepared by using the precursors having a BET/D₅₀ of 0.5 to 2, it was found that the lithium by-product contents were higher than those of the lithium nickel-based oxides of Comparative Examples 1 to 4 prepared by using the precursors having a BET/D₅₀ of less than 0.5 or greater than 2.

Also, the positive electrode active materials prepared in Examples 1 and 2 had a higher cation mixing ratio than the positive electrode active materials prepared in Comparative Examples 1 to 4, and this indicated that the positive electrode active materialsof Examples 1 and 2 had a lower degree of completeness of structure of the surface than the positive electrode active materials of Comparative Examples 1 to 4.

### Experimental Example 2: Heat Flow Analysis

Each of the positive electrode active materials prepared by Examples 1 and 2 and Comparative Examples 1 to 4, carbon nanotubes, and a PVDF binder were added to N-methylpyrrolidone in a weight ratio of 96:2:2 to prepare a positive electrode slurry. An aluminum current collector was coated with thepositive electrode slurry, dried, and then rolled to prepare each positive electrode.

An electrode assembly was prepared by stacking the positive electrode prepared as described above and a lithium metal counter electrode while disposing a separator therebetween, and a coin-half cell was prepared by accommodating the electrode assembly in a battery case and then injecting an electrolyte solution.

The coin-half cell was charged to 4.25 V in a 0.1C constant current mode and charge capacity was then measured.

Then, the charged coin-half cell was disposed in a heating chamber, and heat flow according to temperature was measured with a differential scanning calorimeter (DSC) while the temperature was increased from room temperature to 380°C at a heating rate of 10°C/min.

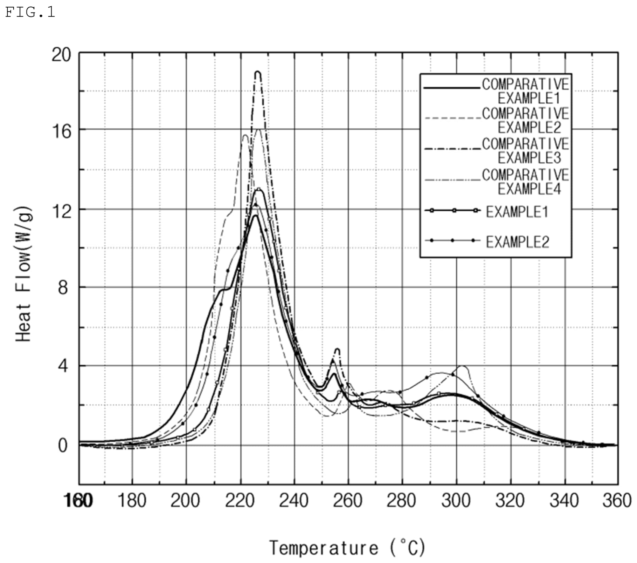

Measurement results are illustrated in FIG. 1 and [Table 3].

**[Table 3]**

| | Charge capacity (mAh) | DSC exothermic main peak temperature (°C) | DSC exothermic main peak intensity (W/g) |
|---|---|---|---|
| Example 1 | 242 | 226.8 | 13.1 |
| Example 2 | 240 | 225.8 | 12.3 |
| Comparative Example 1 | 232 | 226.3 | 11.8 |
| Comparative Example 2 | 242 | 221.7 | 15.8 |
| Comparative Example 3 | 243 | 226.3 | 19.1 |
| Comparative Example 4 | 242 | 226.5 | 16.1 |

As illustrated in Table 3 and FIG. 1, with respect to the coin-half cells prepared by using the positive electrode active materials of Examples 1 and 2, it may be confirmed that thermal stabilities were excellent because exothermic main peak temperatures were higher and intensities were lower than those of the coin-half cells prepared by using the positive electrode active materials of Comparative Examples 2 to 4 having the same composition.

Also, it may be confirmed that the positive electrode active materials of Examples 1 and 2 had thermal stability equivalent to that of the positive electrode active material of Comparative Example 1 including 85 mol% of Ni even though they included 90 mol% or more of Ni, and had better charge capacity than the positive electrode active material of Comparative Example 1.

### Experimental Example 3: Continuous Charging Performance Evaluation

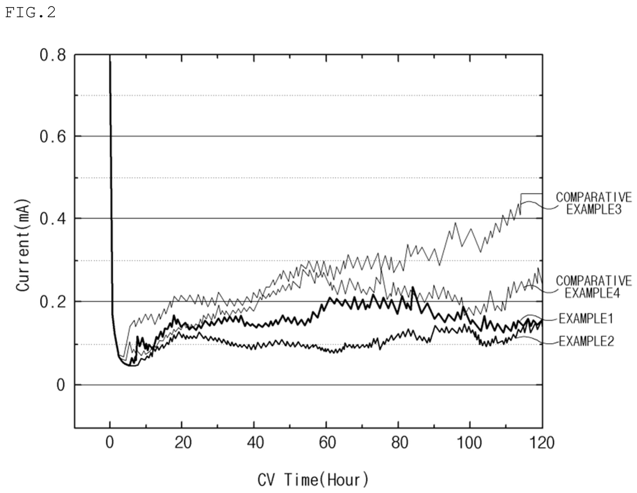

After each of the coin-half cells prepared by using the positive electrode active materials of Examples 1 and 2 and Comparative Examples 3 and 4 in Experimental Example 2 was charged to 4.7 V in a constant current mode at 50°C, an amount of leakage current generated was measured while charging each coin-half cell in a constant voltage mode when the voltage reached 4.7 V. Measurement results are illustrated in FIG. 2.

As illustrated in FIG. 2, with respect to the coin-half cells prepared by using the positive electrode active materials of Examples 1 and 2, it may be confirmed that amounts of leakage current when maintaining a high voltage at a high temperature were smaller than those of the coin-half cells prepared by using the positive electrode active materials of Comparative Examples 3 and 4. This is considered due to the fact that, since the positive electrode active materials of Examples 1 and 2 have the lower degree of the completeness of the structure of the surface than the positive electrode active materials of Comparative Examples 3 and 4, there are less side reactions with the electrolyte solution.

## Claims

1. A method of preparing a positive electrode active material, the method comprising:
preparing a single particle type lithium nickel-based oxide by mixing a lithium raw material and a precursor, in which an amount of nickel (Ni) among total metal elements is 90 mol% or more, D₃₀ is in a range of 5 µm to 8 µm, and a ratio, BET/D₅₀, of a Brunauer-Emmett-Teller (BET) specific surface area to the D₅₀ is in a range of 0.5 to 2, and sintering the mixture.

2. The method of claim 1, wherein the precursor has the ratio, BET/D₅₀, of the BET specific surface area to the D₅₀ of 0.8 to 1.5.

3. The method of claim 1, wherein the precursor has the D₅₀ of 5 µm to 7 µm.

4. The method of claim 1, wherein the precursor has the BET specific surface area of 5 m²/g to 10 m²/g.

5. The method of claim 1, wherein the precursor is represented by [Formula 1].
[Formula 1] NiₐCo_{b}Mn_{c}M¹_{d}(OH)₂
wherein, in Formula 1, M¹ is at least one selected from the group consisting of titanium (Ti), magnesium (Mg), aluminum (Al), zirconium (Zr), yttrium (Y), barium (Ba), calcium (Ca), strontium (Sr), tungsten (W), tantalum (Ta), niobium (Nb), and molybdenum (Mo), and 0.90≤a<1, 0<b<0.1, 0<c<0.1, and 0≤d≤0.05.

6. The method of claim 1, wherein the sintering is performed at 800°C to 900°C.

7. The method of claim 1, wherein the lithium nickel-based oxide comprises a lithium by-product in an amount of 1 mol% to 5 mol%.

8. The method of claim 1, further comprising mixing the single particle type lithium nickel-based oxide with a coating raw material and performing a heat treatment, after the preparing of the single particle type lithium nickel-based oxide.

9. The method of claim 8, wherein the coating raw material comprises at least one element selected from the group consisting of cobalt (Co), Al, W, boron (B), Ti, Mg, Zr, Y, Ba, Ca, Sr, Ta, Nb, and Mo.

10. The method of claim 8, wherein a temperature of the heat treatment is in a range of 300°C to 800°C.

11. A positive electrode active material comprising:
a single particle type lithium nickel-based oxide which includes nickel, cobalt and manganese, has an amount of nickel among total metals excluding lithium of 90 mol% or more, and includes 1 to 30 nodules,
wherein the positive electrode active material has a D₅₀ of 5 µm to 8 µm, and
a maximum value of heat flow, which is measured with a differential scanning calorimeter (DSC) while a coin-half cell prepared by using the positive electrode active material is charged to 4.25 V and heated from room temperature to 380°C at a heating rate of 10°C/min, is 15.0 W/g or less.

12. The positive electrode active material of claim 11, wherein charge capacity is 240 mAh/g or more when the coin-half cell prepared by using the positive electrode active material is charged to 4.25 V.

13. The positive electrode active material of claim 11, wherein a cation mixing ratio of the positive electrode active material is in a range of 0.9 at% to 1.5 at%.

14. The positive electrode active material of claim 11, wherein the single particle type lithium nickel-based oxide is represented by [Formula 2].
[Formula 2] Liₓ[NiₐCo_{b}Mn_{c}M¹₆]O₂
wherein, in Formula 2, M¹ is at least one selected from the group consisting of titanium (Ti), magnesium (Mg), aluminum (Al), zirconium (Zr), yttrium (Y), barium (Ba), calcium (Ca), strontium (Sr), tungsten (W), tantalum (Ta), niobium (Nb), and molybdenum (Mo), and 0.8≤x≤1.2, 0.90≤a<1, 0<b<0.1, 0<c<0.1, and 0≤d≤0.05.

15. The positive electrode active material of claim 11, further comprising a coating layer which is formed on the single particle type lithium nickel-based oxide,
wherein the coating layer comprises at least one element selected from the group consisting of cobalt (Co), Al, W, boron (B), Ti, Mg, Zr, Y, Ba, Ca, Sr, Ta, Nb, and Mo.

16. The positive electrode active material of claim 15, wherein the coating layer comprises the Co, and an amount of the Co comprised in the coating layer is in a range of 0.5 mol% to 2 mol% based on the total number of moles of transition metals included in the entire positive electrode active material.

17. A positive electrode comprising the positive electrode active material of any one of claims 11 to 16.

18. A lithium secondary battery comprising the positive electrode of claim 17.
